# FASCICULE DE BREVET EUROPEEN

(11) **EP 2 171 497 B1**
(45) Date de publication et mention de la délivrance du brevet: **30.08.2017**
(21) Numéro de dépôt: 08786064.9
(22) Date de dépôt: 11.07.2008
(51) Int. Cl.: G01S 13/78, H01Q 21/29, H01Q 25/00, H01Q 25/02, H04L 27/00

(54) **ANTENNE OMNIDIRECTIONNELLE POUR INTERROGATEUR**
RUNDSTRAHLERANTENNE FÜR ABFRAGEGERÄT
OMNIDIRECTIONAL PSEUDO-ANTENNA FOR INTERROGATOR OR SYSTEM ALLOWING THE INTERROGATION RESPONSE AND/OR PASSIVE LISTENING FUNCTIONS

(30) Priorité: 12.07.2007 FR 0705057
(43) Date de publication de la demande: 07.04.2010
(73) Titulaire: THALES, 92400 Courbevoie (FR)
(72) Inventeur: SOULA, Stéphane, 53000 Laval (FR); PROVOST, Claude, 53000 Laval (FR)
(74) Mandataire: Dudouit, Isabelle
(86) Numéro de dépôt international: PCT/EP2008/059064
(87) Numéro de publication internationale: WO 2009/007444

(56) Documents cités:
- EP-A- 0 643 439
- US-A- 3 594 811
- US-A- 5 600 326

## Description

L'invention concerne notamment un système d'identification équipé d'un dispositif interrogateur se présentant sous la forme d'une antenne ayant un angle d'ouverture donné. Elle concerne, par exemple, les systèmes interrogateur/répondeur devant fonctionner dans les deux modes suivant : le mode interrogateur/répondeur et le mode écoute passive. Le document "EP 0 643 439 A" divulgue un système permettant de fonctionner dans un mode interrogateur et/ou dans un mode d'écoute passive selon le préambule de la revendication 1. Les systèmes d'interrogation et d'identification d'un objet sont équipés d'antenne ayant une ouverture d'angle donné permettant d'interroger dans une direction (émettre un faisceau directif) et dans un secteur d'angle contrôlé. Ces systèmes interrogateur ou interrogateur/répondeur du fait de la directivité de leur antenne ne permettent généralement pas de faire de l'écoute passive. En effet, le secteur d'angle sur lequel elles opèrent est limité. D'autre part, le faible taux d'émission des répondeurs non sollicités (plus connus sous le terme anglo-saxon « squitters » (∼1Hz)), conjugué à l'utilisation des antennes interrogateur/répondeur ou IFF (Identification Friend and Foe) traditionnelles (voie somme Σ / voie différence Δ avec une ouverture de ∼ 10°) implique que, pour réaliser un relevé de la situation aérienne, un interrogateur IFF habituellement utilisé dans l'art antérieur doit effectuer de nombreux tours d'antenne. La réponse du « squitter » ne sera reçue que lorsqu'il se trouvera dans un secteur d'angle précis et le temps d'observation de sa réponse sera de fait limité (durée pendant laquelle on observe la réponse).

Il y a donc une inadaptation complète des systèmes d'antennes actuels (diagrammes d'antennes Σ/Δ nécessaire au traitement de suppression des lobes secondaires en abrégé anglo-saxon RSLS) utilisé par les interrogateurs IFF à la fonction d'écoute des squitters qui demande une antenne omnidirectionnelle.

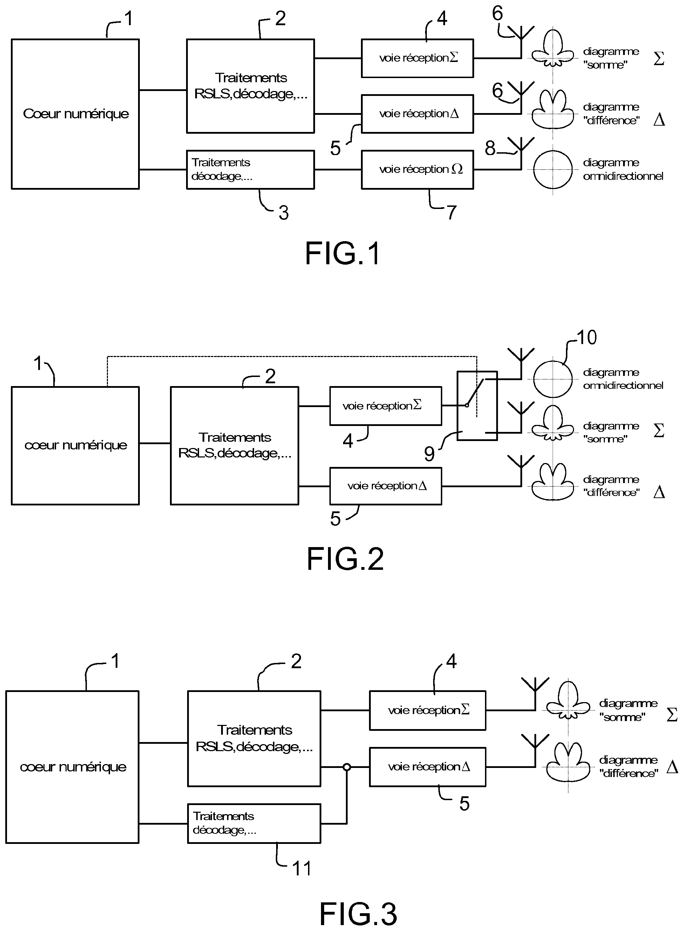

Différentes solutions sont actuellement connues de l'art antérieur. Différents exemples sont donnés en relation aux figures 1, 2 et 3 qui comprennent de manière commune un coeur numérique 1, un dispositif de traitement du signal, ayant notamment pour fonction d'éliminer les réponses des lobes d'antenne secondaires ou RSLS, de décodage des informations du signal reçu par le système, une voie de réception 4 correspondant au diagramme somme de l'antenne, une voie de réception 5 correspondant au diagramme différence de l'antenne 6 équipant l'interrogateur répondeur.

Une première solution pour répondre au besoin d'écoute passive est illustrée à la figure 1. Elle consiste à ajouter une voie de réception 7 et une antenne omnidirectionnelle 8 dédiée à la fonction d'écoute, ainsi qu'un dispositif 3 de traitements et de décodage des informations reçues sur cette voie supplémentaire. L'ajout d'une telle antenne et d'une voie de réception dédiée entraîne la présence d'une voie numérique de traitement dédiée. Ces ajouts engendrent des problèmes de complexité d'installation, de coûts (consommation des dispositifs de traitement numérique FPGA, ....)

Une deuxième solution illustrée à la figure 2 repose sur l'ajout d'un dispositif de commutation 9 permettant d'utiliser une antenne omnidirectionnelle 10 sur la voie de réception somme de l'antenne habituellement utilisée. Un tel dispositif entraîne l'ajout d'une antenne omnidirectionnelle et une augmentation de la complexité de la fonction radiofréquence et d'installation de l'ensemble.

Une troisième solution connue du Demandeur est illustrée à la figure 3. Elle consiste à ajouter une chaîne de traitement 11 supplémentaire sur la voie du diagramme somme ou Δ. Dans l'exemple de la figure 3, l'ajout se fait sur la voie de réception différence ou Δ. Ceci conduit à une augmentation de la complexité (avec 2 voies de décodage) du module de traitement supplémentaire sur la voie ainsi que des limitations liées à la zone "aveugle" dans l'axe de l'antenne Δ.

Le système selon l'invention repose sur une nouvelle approche qui consiste à créer une pseudo-antenne omnidirectionnelle à partir d'une antenne directive (ayant une ouverture α donnée pour le diagramme d'antenne donné) et d'une chaîne de traitement appropriée permettant d'utiliser le système dans un premier mode interrogateur ou dans un deuxième mode d'écoute passive. Dans le cas où le système est un système IFF, en utilisant les diagrammes de rayonnement des antennes Σ et Δ des interrogateurs IFF (diagramme de rayonnement de l'antenne Δ recouvrant celui de l'antenne Σ hors du lobe principal de l'antenne Σ) et au moyen d'un traitement effectué dans l'interrogateur, l'invention permet d'obtenir une station d'écoute efficace (écoute sur 360° au lieu des ∼8° d'ouverture d'un système standard).

L'objet de l'invention concerne un système permettant de fonctionner dans un mode interrogateur et/ou dans un mode d'écoute passive selon la revendication 1. Le système et le procédé selon l'invention offrent notamment les avantages suivantes :
- de transformer à moindre coût un interrogateur IFF Mode S en station d'écoute ADS-B sans modification de l'installation (ajout antenne omni, commutation RF, voie de réception) ou modification matérielle de l'interrogateur.
- de réaliser la nouvelle fonction avec une modification du FPGA simple (addition de 2 bus et injection du signal résultant dans la chaîne de traitement normale),
- d'ajouter des traitements configurables permettant de recaler (domaine temporel et amplitude) les voies,
- de diminuer le temps d'acquisition des dispositifs de réponse passive ou « squitters » d'un interrogateur dépourvu d'antenne omnidirectionnelle par exemple, de quelques dizaines de secondes à quelques secondes.

Il concerne aussi un procédé selon la revendication 5. D'autres caractéristiques et avantages de la présente invention apparaîtront mieux à la lecture de la description qui suit d'un exemple de réalisation donné à titre illustratif et nullement limitatif annexé des figures qui représentent :
- Les figures 1 à 4, des exemples de système et d'architecture de système selon l'art antérieur,
- La figure 5, le détail du traitement des signaux et de commande du mode de fonctionnement du système,
- La figure 6, un détail du bloc de traitement de type FPGA, et
- La figure 7, le détail de la partie ajoutée au système interrogateur permettant de le faire fonctionner en système d'écoute passif
- La figure 8, le tracé de différents signaux pris en différents points du système IFF.

Afin de mieux faire comprendre le principe du système selon l'invention, la description est donnée pour un système utilisé pour effectuer des interrogations/réponse ou de l'écoute passive, désigné dans la suite de la description système IFF.

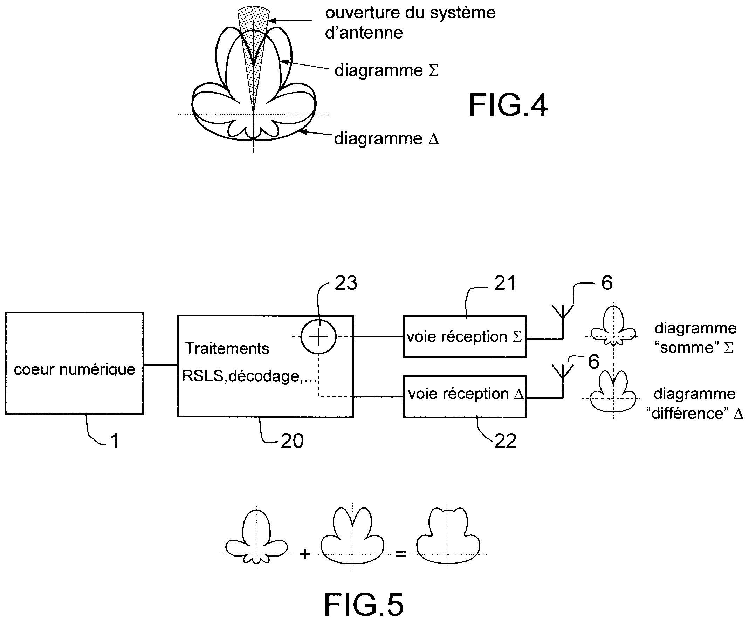

La figure 4 montre les diagrammes pour une antenne habituellement utilisée dans les interrogateurs IFF, avec une ouverture d'antenne donnée α. L'ouverture d'antenne correspond environ à 10°. L'antenne 6 comprend un diagramme d'antenne somme Σ et un diagramme différence Δ.

Dans un mode de fonctionnement standard pour le système IFF, les voies vidéo arrivent dans un dispositif numérique 20 pour exploitation. L'idée est d'envoyer dans le dispositif d'exploitation des vidéos, non plus uniquement la voie Somme 21, la voie différence 22, mais l'addition 23 des signaux des voles Σ et Δ. Le traitement numérique 20 additionne les informations (signaux vidéo numérisés) issues des récepteurs situés sur les antiennes Σ et Δ, pour obtenir une couverture sur 360°.

Les dispositifs de décodage des réponses mode S n'exploitent donc plus uniquement les informations issues des répondeurs situés dans la largeur de bande effective (EBW pour Effective Band Width) mais la somme des signaux reçus sur les 2 diagrammes d'antennes Σ et Δ.

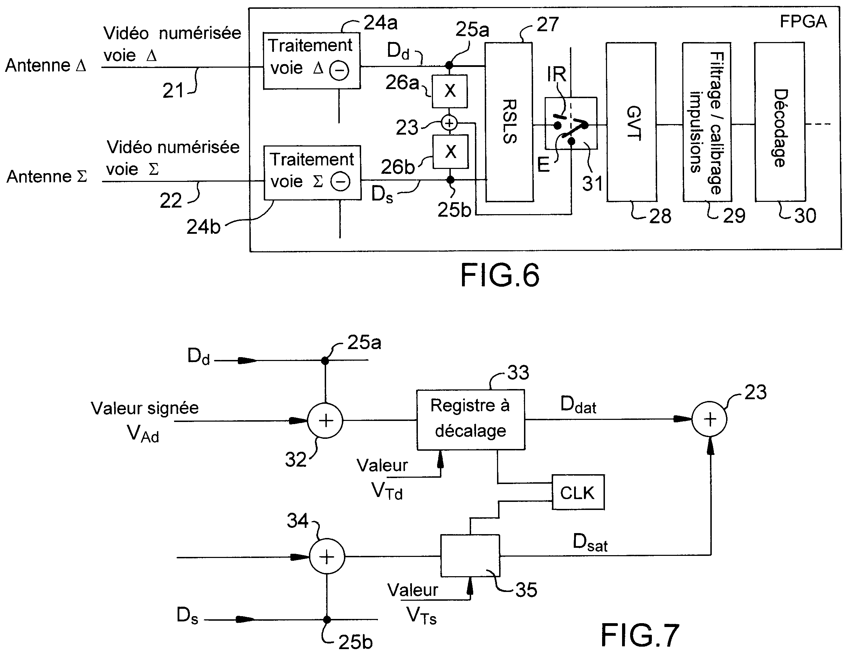

La figure 5 schématise de manière fonctionnelle le système selon l'invention. Les signaux arrivent sur des récepteurs situés sur l'antenne. Ils sont ensuite séparés sur deux voies. Une première voie numérisée 21 correspond à la voie de réception somme et une deuxième voie numérisée 22 à la voie de réception différence. Les deux voies de réception sont liées au dispositif de traitement 20 détaillé à la figure 6.

Le dispositif de traitement 20 (figure 6) comprend un moyen 31 permettant de sélectionner le mode de fonctionnement du système; mode interrogateur/répondeur ou mode d'écoute passive.

Dans le cas où le mode de fonctionnement choisi est le mode interrogateur-répondeur, c'est-à-dire que le dispositif de commande 31 est mis en position IR représenté en pointillés sur la figure 6. Le signal reçu sur la voie numérisée 21 passe dans un dispositif de traitement 24a ayant notamment pour fonction d'éliminer les signaux n'ayant pas un niveau d'amplitude suffisant, par exemple. La comparaison est effectuée par rapport à une valeur de seuil fixée. Le signal seuillé Dd est transmis directement au dispositif 27 permettant de procéder au traitement de suppression des lobes connus sous l'abrégé.RSLS pour Receiver Side Lobe Suppression, dispositif permettant au moyen d'un seuil configurable, d'éliminer une réponse qui est reçue sur la voie différence Δ à un niveau supérieur au niveau de cette même réponse sur la voie somme Σ. La valeur du RSLS permet de fixer la valeur de la largeur de bande effective; puis au dispositif 28 permettant d'effectuer les traitements de gain variable dans le temps connu sous l'abréviation GVT. Le dispositif 28 comprend des paramètres de durée de plateau et niveau de plateau permettant, notamment de fixer la valeur de largeur de bande effective ou EBW. Ces deux traitements sont connus de l'Homme du métier et ne seront donc pas détaillés. Les signaux sont ensuite filtrés par un dispositif de filtrage/calibrage des impulsions 29, puis le dispositif de décodage 30. Ces différents éléments sont intégrés dans un dispositif de traitement de type FPGA. Le signal reçu sur la voie numérisée 22 passe dans un dispositif de traitements 24b ayant notamment pour fonction d'éliminer les signaux ne pouvant être inférieurs à une valeur de seuil donnée. Les signaux sont transmis au dispositif 27 afin d'être traités de manière similaire au signal seuillé Dd comme il a été décrit précédemment.

Lorsque l'utilisateur souhaite faire fonctionner le système dans le mode d'écoute passive, il agit sur la commande de l'antenne pour la mettre en position E. Dans ce cas, les signaux reçus sur la voie différence Dd et sur la voie somme Ds sont transmis au niveau des points 25a et 25b à un dispositif 26a, 26b et 23 qui a notamment comme première fonction de les additionner avant de les transmettre à la chaîne de traitement comprenant le dispositif 28 précité permettant d'effectuer le traitement GVT, du dispositif de filtrage et de calibrage des impulsions et du décodeur 30 des informations contenues dans le signal somme. Ce dispositif détaillé à la figure 7 a aussi pour fonction, de recaler en temporel et/ou en amplitude les signaux numérisés reçus sur les voies somme et différence. Le traitement numérique permet ainsi d'obtenir une couverture de 360°.

La figure 7 schématise un exemple de structure pour le dispositif 26a, 26b et 23 de la figure 6. L'exemple a été donné lorsque l'on souhaite recaler les signaux en amplitude et en temporel. Pour cela, le signal vidéo numérisé reçu sur la voie différence est dérivé au niveau du point 25a pour être additionné 32 à une valeur signée VAd correspondant au décalage en amplitude que l'on souhaite introduire. Le signal recalé en amplitude est ensuite envoyé dans un registre à décalage 33 qui reçoit aussi une valeur non signée de décalage temporel VTd à ajouter au signal. Le signal recalé en amplitude et en temps, Ddat est ensuite transmis au sommateur 23 pour être ajouté au signal vidéo numérisé reçu sur la voie somme qui a subit des traitements similaires. Le signal Ds est recalé en amplitude en lui ajoutant 34 une valeur signée VAs correspondant au décalage en amplitude à appliquer, puis ce signal est transmis à un deuxième registre à décalage 35 qui reçoit une valeur signée VTd ayant pour fonction de recaler temporellement le signal. Le signal issu de ces traitements, noté Dsat est alors ajouté au signal Ddat, comme il a été indiqué précédemment.

Une horloge 36, est utilisée pour réaliser la temporisation au niveau des registres à décalage. Cette horloge peut être l'horloge du FPGA utilisée pour synchroniser les différentes opérations effectuées au sein du FPGA.

Les traitements numériques sont effectués dans des FPGA ou des ASICs, par exemple.

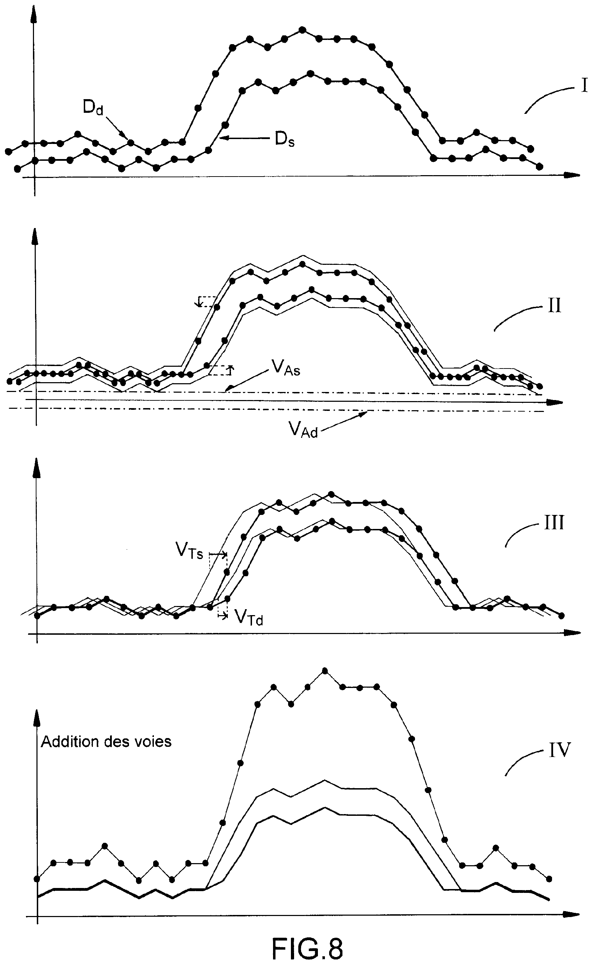

Sur la figure 8, sont tracés dans des diagrammes amplitude, temps, les évolutions correspondant aux signaux discutés ci-avant, pris en différents points du système.

Le premier graphe 1 représente les signaux vidéos numérisés de la voie somme et de la voie différence entrant dans le dispositif de traitement 20. Le deuxième graphe II représente le recalage en amplitude pour les signaux du premier graphe et les signaux issus des additionneurs 32, 34. Le recalage permet d'ajuster le niveau de bruit des 2 voies à la même valeur.

Sur le troisième graphe III sont représentés les signaux recalés en amplitude et en temporel et les décalages temporels introduits par les registres à décalage configurable. Le recalage temporel permet d'éviter un élargissement artificiel des impulsions lors de leur addition.

Le quatrième graphe IV, représente le signal vidéo numérisé somme, le signal vidéo numérisé différence, et la somme de ces deux signaux recalés dans cet exemple en temps et en amplitude, ledit signal étant traité ensuite pas la chaîne de traitement du FPGA.

Les recalages en amplitude et en temps sont effectués uniquement dans certains cas. D'autres traitements exécutés sur les signaux peuvent être envisagés sans sortir du cadre de l'invention.

## Revendications

1. Système permettant de fonctionner dans un mode interrogateur et/ou dans un mode d'écoute passive, comportant en combinaison au moins les éléments suivants:
• une antenne (6) ayant un secteur d'ouverture donné α,
• un moyen de commande (31) permettant de faire passer le système dans un premier mode de fonctionnement interrogateur utilisant un premier secteur d'angle donné ou dans un deuxième mode de fonctionnement écoute passive utilisant un deuxième secteur d'angle de valeur supérieur au premier, **caractérisé en ce qu'**il comporte:
• des moyens (23) permettant d'additionner (20) les informations (signaux vidéo numérisés) issues des récepteurs situés sur les voies sommes et différences Σ et Δ, de l'antenne (6) pour obtenir une couverture sur 360°dans le cas du mode de fonctionnement écoute passive.

2. Système selon la revendication 1, **caractérisé en ce qu'**il comporte un filtre (24a, 24b) permettant d'éliminer les signaux d'amplitude inférieure à une valeur de seuil donnée.

3. Système selon la revendication 1, **caractérisé en ce qu'**il comporte des moyens de recalage en amplitude et/ou en temporelle des signaux reçus sur chacune des voies somme et différence dans le cas du fonctionnement en écoute passive.

4. Système selon l'une des revendications 1 à 3, **caractérisé en ce qu'**il comprend une antenne de type interrogateur/répondeur.

5. Procédé permettant de faire fonctionner en mode interrogateur et/ou en mode écoute passive un dispositif pourvu d'au moins une antenne ayant un secteur donné, comportant:
au moins les étapes suivantes :
sélectionner le mode interrogateur ou le mode écoute passive,
• si le mode sélectionné est le mode interrogateur, alors transmettre les signaux reçus sur la voie somme de l'antenne et sur la voie différence à une chaîne de traitement adaptée à traiter les signaux reçus, **caractérisé en ce que**
• si le mode sélectionné est le mode écoute passive, alors additionner les informations (signaux vidéo numérisés) issues des récepteurs situés sur la voie somme et sur la voie différence Σ et Δ, de l'antenne pour obtenir une couverture sur 360°.

6. Procédé selon la revendication 5, **caractérisé en ce qu'**il comporte une étape où les signaux reçus sont filtrés afin d'éliminer les signaux d'amplitude insuffisante.

7. Procédé selon la revendication 5, **caractérisé en ce qu'**avant de sommer les signaux reçus sur la voie somme et la voie différence, on exécute une étape pour recaler en amplitude et/ou en temporelle lesdits signaux.

8. Procédé selon la revendication 5, **caractérisé en ce que** l'on utilise un mode interrogateur/répondeur et un mode écoute passive.

## Patentansprüche

1. System, das in einem Abfragemodus und/oder in einem passiven Mithörmodus arbeiten kann, das in Kombination mindestens die folgenden Elemente umfasst:
• eine Antenne (6) mit einem gegebenen Öffnungssektor α,
• ein Steuermittel (31), mit dem das System in einen ersten Abfragebetriebsmodus, der einen ersten gegebenen Winkelsektor nutzt, oder in einen zweiten passiven Mithörbetriebsmodus geschaltet werden kann, der einen zweiten Winkelsektor mit einem höheren Wert als der erste nutzt, **dadurch gekennzeichnet, dass** es Folgendes umfasst:
• Mittel (23), die es zulassen, die Informationen (digitalisierte Videosignale) von auf den Summen- und Differenzkanälen Σ und Δ der Antenne (6) befindlichen Empfängern (20) zu addieren, um eine Öffnung auf 360° im Falle des passiven Mithörbetriebsmodus zu erhalten.

2. System nach Anspruch 1, **dadurch gekennzeichnet, dass** es ein Filter (24a, 24b) umfasst, mit dem die Amplitudensignale, die kleiner sind als ein gegebener Schwellenwert, eliminiert werden können.

3. System nach Anspruch 1, **dadurch gekennzeichnet, dass** es Mittel zum Neueinstellen von Amplitude und/oder Timing der auf jedem der Summen- und Differenzkanäle empfangenen Signale im Falle des passiven Mithörbetriebs umfasst.

4. System nach einem der Ansprüche 1 bis 3, **dadurch gekennzeichnet, dass** es eine Antenne des Abfrager/Responder-Typs umfasst.

5. Verfahren, mit dem eine Vorrichtung, die mit mindestens einer Antenne mit einem gegebenen Sektor ausgestattet ist, im Abfragebetriebsmodus und/oder im passiven Mithörmodus betrieben werden kann, das mindestens die folgenden Schritte umfasst:
Auswählen des Abfragemodus oder des passiven Mithörmodus:
• wenn der gewählte Modus der Abfragemodus ist, Senden der empfangenen Signale auf dem Summenkanal der Antenne und auf dem Differenzkanal zu einer Verarbeitungskette zum Verarbeiten der empfangenen Signale,
• **dadurch gekennzeichnet, dass**
• wenn der gewählte Modus der passive Mithörmodus ist, die Informationen (digitalisierte Videosignale) von den auf dem Summenkanal und dem Differenzkanal Σ und Δ der Antenne befindlichen Empfängern addiert werden, um eine Öffnung auf 360° zu erhalten.

6. Verfahren nach Anspruch 5, **dadurch gekennzeichnet, dass** es einen Schritt umfasst, in dem die empfangenen Signale gefiltert werden, um die Signale mit unzureichender Amplitude zu eliminieren.

7. Verfahren nach Anspruch 5, **dadurch gekennzeichnet, dass** vor dem Summieren der auf dem Summenkanal und dem Differenzkanal empfangenen Signale ein Schritt zum Neueinstellen von Amplitude und/oder Timing der Signale durchgeführt wird.

8. Verfahren nach Anspruch 5, **dadurch gekennzeichnet, dass** ein Abfrager/Responder-Modus und ein passiver Mithörmodus benutzt werden.

## Claims

1. System enabling operation in an interrogator mode and/or in a passive listening mode, comprising in combination at least the following elements:
• an antenna (6) having a given aperture sector α,
• a control means (31) enabling putting the system into a first interrogator operating mode using a first given angle sector or into a second passive listening operating mode using a second angle sector larger than the first, **characterised in that** it comprises:
• means (23) enabling adding (20) information (digitised video signals) derived from receivers situated on the sum and difference pathways Σ and Δ, of the antenna (6) in order to obtain 360° coverage in the case of the passive listening operating mode.

2. System according to claim 1, **characterised in that** it comprises a filter (24a, 24b) enabling eliminating signals of lower amplitude than a given threshold value.

3. System according to claim 1, **characterised in that** it comprises means of amplitude and/or temporal recalibration of the signals received on each of the sum and difference pathways in the case of passive listening operation.

4. System according to one of claims 1 to 3, **characterised in that** it comprises an interrogator/responder-type antenna.

5. Method enabling operation in interrogator mode and/or in passive listening mode of a device having at least one antenna having a given sector, comprising at least the following steps:
selecting the interrogator mode or the passive listening mode,
• if the selected mode is the interrogator mode, then transmitting the signals received on the sum pathway of the antenna and on the difference pathway to a processing chain suitable for processing the received signals,
• **characterised in that**
• if the selected mode is the passive listening mode, then adding information (digitised video signals) derived from receivers situated on the sum pathway and the difference pathway Σ and Δ, of the antenna in order to obtain 360° coverage.

6. Method according to claim 5, **characterised in that** it comprises a step where the received signals are filtered in order to eliminate signals of insufficient amplitude.

7. Method according to claim 5, **characterised in that** before adding the signals received on the sum pathway and the difference pathway, a step is taken to perform amplitude and/or temporal recalibration of said signals.

8. Method according to claim 5, **characterised in that** an interrogator/responder mode and a passive listening mode are used.
